# EUROPÄISCHE PATENTANMELDUNG

(11) **EP 2 679 878 A2**
(43) Veröffentlichungstag der Anmeldung: **01.01.2014**
(21) Anmeldenummer: 13003251.9
(22) Anmeldetag: 26.06.2013
(51) Int. Cl.: F16M 11/12, F16M 11/14, F16M 11/24, F16M 13/00, G03B 17/56

(54) **Kamerahalterung, Kamera und Stützstruktur zur Aufnahme von Panoramen**

(30) Priorität: 28.06.2012 DE 102012012817
(71) Anmelder: Herdieckerhoff, Martin, 85635 Höhenkirchen-Siegertsbrunn (DE)
(72) Erfinder: Herdieckerhoff, Martin, 85635 Höhenkirchen-Siegertsbrunn (DE)

(57) **Zusammenfassung**

Beschrieben wird eine Haltevorrichtung für eine Kamera (5), mit einem Kamera-Adapter (1), dem ein parallaxfreier Punkt (2) zugeordnet werden kann, und einem Stativ-Adapter (3), wobei der Kamera-Adapter in wechselnden Positionen so auf den Stativ-Adapter aufgesetzt werden kann, dass der parallaxfreie Punkt ortsfest bleibt.

## Beschreibung

### Technisches Gebiet

Die Erfindung bezieht sich auf eine Haltevorrichtung für eine Kamera, mit der es möglich ist, Aufnahmen für ein Panoramabild ohne Parallaxenfehler zu erfassen.

### Stand der Technik

### Terminologie

- Die Begriffe **Panoramakopf, Nodalpunktadapter und Kamera-Adapter** werden synonym verwendet. Die gängige englische Bezeichnung dafür ist **panorama head.**
- Der **parallaxfreie Punkt** oder **pfP,** in DE102010028956A1 auch bezeichnet als **Punkt ohne Parallaxe** oder **PoP,** ist derjenige Punkt im Inneren eines Objektivs, um welchen die Kamera mitsamt dem Objektiv zwischen den Aufnahmen für ein Panorama azimutal und polar geschwenkt werden muss, damit die einzelnen Aufnahmen später am Computer durch einen Stitcher wie Autopano, PTGui oder Hugin ohne Parallaxenfehler zu einem Panoramabild zusammengesetzt werden können. Der pfP wird im Deutschen unzutreffend aber häufig auch als **Nodalpunkt** oder **Zentrum der Eintrittspupille** und im Englischen als **no-parallax-point,** abgekürzt **NPP,** als **nodal point,** als **center of entrance pupil** oder als **least parallax** point bezeichnet. Der pfP liegt auf der optischen Achse des Objektivs. Bei den in der Panoramafotografie gebräuchlichsten Linsen (Fischaugen und Weitwinkelobjektive) liegt er im Inneren des Objektivs und zwar etwa 5 mm bis 5 cm hinter dem Eintrittspunkt der optischen Achse. Möglichkeiten zur Bestimmung des pfP sind beschrieben in FINDING THE NO-PARALLAX POINT (http://www.johnhpanos.com/epcalib.htm). Am Ende dieser Quelle findet man Links zu exzellenten weiteren Dokumenten bezüglich dieses Punktes.
- Zenit: Der Punkt oder Bereich senkrecht über der Kamera. Nadir: Der Punkt oder Bereich senkrecht unter der Kamera.
- Kegelflächen: nach dem "Taschenbuch der Mathematik" von Bronstein-Semendjajew: Eine Kegelfläche entsteht durch die Bewegung einer Geraden (*Erzeugenden*) die durch einen festen Punkt (*Scheitel*) geht und längs einer Kurve (*Leitkurve*) gleitet.

### Fachbücher

Die Bücher "Panoramafotografie - Der Meisterkurs" von Stefan Gross (erschienen im Nov. 2011 - siehe z.B. http://www.traumflieger.de/desktop/panorama/panobuch/index.php)
und "Das Praxisbuch - Digitale Panoramafotografie" von Thomas Bredenfeld (erschienen 2010 - siehe http://www.galileodesign.de/katalog/buecher/titel/gp/titelID-1840)
widmen den marktüblichen Panoramaköpfen jeweils mehrere Dutzend Seiten.

### Suchmaschinen

Ein guter Eindruck vom Angebot an Panoramaköpfen ist schnell erhältlich über die Google Bildersuche nach den Begriffen **Panoramakopf** oder
**Nodalpunktadapter.**

### Ausgewählte Anbieter von Panoramaköpfen und Stativen

- Novoflex - aus dem Allgäu
- Manfrotto - bietet vor allem Stative an, hat aber auch Panoramaköpfe.
- PT4Pano - aus Egmating bei München, bietet Adapter mit ähnlicher Zielrichtung an (klein, leicht, preiswert, geeignet für Kompaktkameras):
   - Panorama-Komplett-Set für Kompaktkameras - siehe auch http://pt4pano.com/de/blog/panorama-mit-kompakten.
   - Multirow Adapter - erlaubt Schwenks nach oben und nach unten.

Die Adapter von PT4Pano werden herstellerseitig kameraspezifisch konfiguriert und erzielen dadurch eine hohe Stabilität bei niedrigem Gewicht.
- Nodal Ninja - aus den USA.

### Patente

### EspaceNet:

(1) CN102192388 (A) - Three-dimensional panorama head
(2) KR20110048975 (A) - BALL HEAD FOR PANORAMA PHOTOGRAPHING
(3) CN201795236 (U) - Three-dimensional panorama pan-tilt head
(4) CN201448566 (U) - Panorama head structure
(5) CN201464782 (U) - Bracket for panorama shooting
(6) WO2009045056 (A2) - BALL HEAD FOR TRIPOD
(7) KR20090034265 (A) - BALL HEAD FOR TRIPOD
(8) CN101378559 (A) - Mobile phone capable of panorama shooting by pick-up head combination (a mobile phone with multiple cameras)
(9) US2006175483 (A1) - Panorama support device
(10) JP2005348448 (A) - PANORAMA IMAGING APPARATUS
(11) JP2007028272 (A) - PANORAMA CAMERA

### Depatisnet:

(12) CN000201795236U - Three-dimensional panorama pan-tilt head-schützt vermutlich den "Slanted View" Adapter. Panorama-VR-System Slant von Novoflex, der auf einem anderen Weg ähnliche Ziele wie die Erfindung verfolgt (niedriger Preis, Gewicht, Volumen).
(13) CN000201754214U - Panorama shooting device
(14) CN000201464782U - Bracket for panorama shooting
(15) CN000201448566U - Panorama head structure
(16) CN000201247380Y - Apparatus and bracket for collecting panorama image
(17) GB000002291468A - A panorama head for optical equipment, particularly photographic equipment
(18) DE202009005679U1 [DE] Adapter zum parallaxefehlerfreien Drehen einer Kamera bei Panoramaaufnahmen (Erwin Hopf von PT4Pano)
(19) DE102010028956A1 [DE] Kamerahalterung, insbesondere für die Erstellung von Panoramabildern, und Verfahren zum Einfügen der Kamera in die Kamerahalterung (Mandrella-Simon, Tanja, 80538, München) - mit Gabelstütze für das Objektiv, bevorzugte Verwendung auf Baustellen, montierbar auf Lasermessgerät der Firma Leica Geosystems.
(20) DE000010359361A1 [DE] Verfahren und Anordnung zur Gewinnung hochwertiger Panorama-Bildaufnahmen (Clauß, Ulrich, Dr.-Ing., 08297 Zwönitz) - sehr anspruchsvoll und mathematisch, verwendet Gabelstütze.
(21) DE000020312747U1 [DE] Stativkopf zur vertikalen Anbringung einer Kamera und Nodalpunkt-Justierung
(22) DE102006020027A1 [DE] Kamerahalter für Stativ (Friedrich, Frank, 78658 Zimmern ) - beschreibt u.a. einen Adapter mit einer Viertelkreisschiene für den Wechsel zwischen Aufnahmen im Querformat und im Hochformat.
(23) DE202005001542U1 [DE] Stativkopf zur Anbringung einer Kamera und Nodalpunkt-Justierung (MOELLER THOMAS)
(24) DE202005010613U1 [DE] Drehpunktschiene für Einbeinstativ (AMONTH MILKO)
(25) DE202009004518U1 [DE] Digitalkamera zur Erzeugung vollsphärischer Aufnahmen bestehend aus optischem System und digitalem Bildsensor in einer neuartigen geometrischen Anordnung (Weiss, Marcus, Dr., 67655 Kaiserslautern)
(26) DE202011004046U1 [DE] Handgriff zur Aufnahme von Panoramaplatten in der Fotografie (Hangen, Norbert, 56412, Großholbach)
(27) DE202005011374U1 [DE] Adapter zur Justierung des korrekten Kamera-Drehpunktes (Nodalpunkt) bei der Erstellung von Panorama-Aufnahmen

### (KESTLER JENS)

### Merkmale handelsüblicher Panoramaköpfe

Die derzeit kommerziell erhältlichen Panoramaköpfe weisen überwiegend mindestens eines der folgenden Merkmale auf:
- Hoher technischer Aufwand, Zusammensetzung aus Dutzenden von Einzelteilen und daher ein Preis von mindestens 100 Euro.
- Ein Gewicht von mindestens 1000g - meist eher 2000 bis 3000g.
- Der Kopf kann nur in Kombination mit einem Fotostativ verwendet werden.
- Der Kopf ist verschraubt mit dem Stativ
- Der Kopf ist verschraubt mit der Kamera
- Die Konstruktion basiert auf mehreren verstellbaren Schienen.
- Für das Schwenken um unterschiedliche Achsen werden unterschiedliche Gelenke verwendet.
- Die Kamera kann um höchstens zwei Achsen geschwenkt werden-mindestens um die vertikale Achse, evtl. auch um eine horizontale Achse.
- Die Kamera kann nicht um ihre optische Achse geschwenkt werden.
- Die Kamera kann nicht durch die Schritte Anheben, Drehen, Absetzen um ihren parallaxfreien Punkt geschwenkt werden.

### Merkmale der Erfindung

Der beschriebene Kamera-Adapter weist kein einziges der oben angeführten Merkmale auf, im Gegensatz dazu aber u.a. die folgenden:
- Er kann aus einem einzigen Teil bestehen und preiswert hergestellt werden.
- Er erfordert keine Verschraubung mit der Kamera.
- Er erlaubt Drehungen um beliebige Achsen.
- Er wiegt weniger als 500g.
- Er benötigt nicht zwingend ein Fotostativ.
- E wird lose auf einen Stativ-Adapter aufgelegt, der auch aus einem Trinkgefäß bestehen oder aus Steinen oder Ästen improvisiert werden kann.
- Er muss nicht im eingebauten Zustand geschwenkt werden sondern dies kann durch Anheben, Drehen und Aufsetzen erfolgen.

### Darstellung der Erfindung

### Das der Erfindung zugrunde liegende Problem

Mehrere Fotos können nur dann fehlerfrei mit Stitching-Software (Autopano, PTGui, Hugin etc.) zu einem Panorama zusammengesetzt werden, wenn in den Überlappungsbereichen der einzelnen Fotos keine Parallaxenfehler vorliegen.

Eine Voraussetzung für Fotoserien ohne Parallaxenfehler ist die präzise Bestimmung des parallaxfreien Punktes des verwendeten Objektivs.

Weiterhin muss in der zu fotografierenden Szene ein fixer Projektionspunkt gewählt werden, von dem aus das Panorama aufgenommen werden soll. Bei allen Aufnahmen für das Panorama muss nun der parallaxfreie Punkt des Objektivs exakt am gewählten Projektionspunkt bleiben während die Kamera zwischen den Aufnahmen je nach Bedarf mehrfach und um verschiedene Achsen gedreht wird um die gewünschte Abdeckung des Gesichtsfeldes zu erzielen.

Die Aufgabe eines Panoramakopfes ist es, über alle Positionen der Kamera, aus denen Aufnahmen geschossen werden, eine möglichst präzise Fixierung des parallaxfreien Punktes der Kamera am Projektionspunkt der Szene zu ermöglichen. Für zylindrische Panoramen ist die Erfassung des gesamten Horizontes durch parallaxenfreie Aufnahmen im Hochformat erwünscht. Für Kugelpanoramen ist die lückenlose parallaxenfreie Erfassung eines sphärischen Blickfeldes erwünscht welches u.a. den gesamten Horizont, den Zenit und den Nadir umfasst.

### Die Problemlösung

### Kamera-Adapter

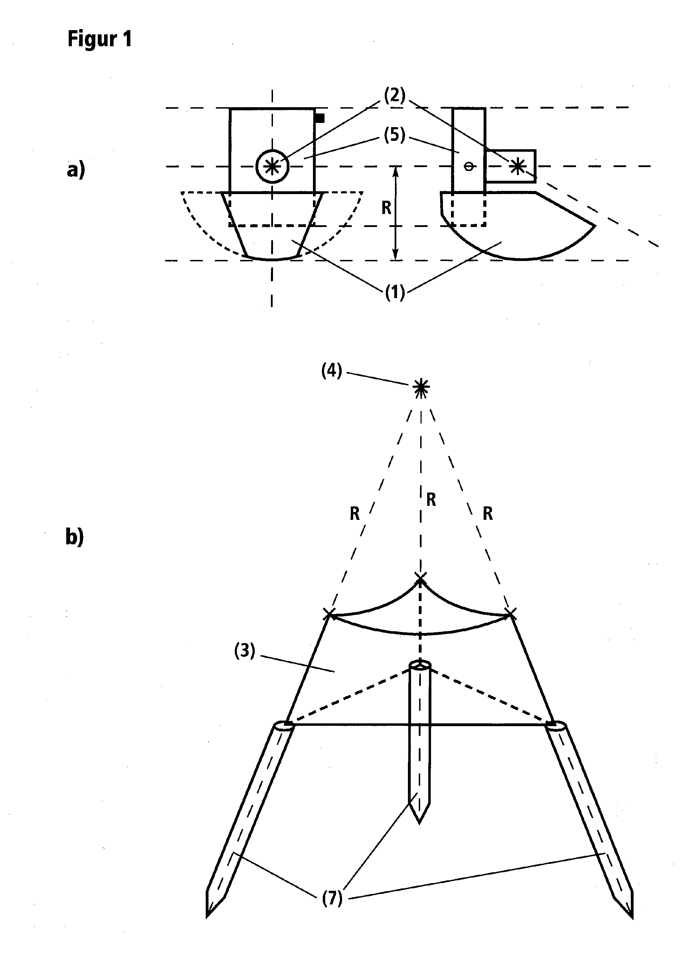

Das Grundprinzip der Lösung - illustriert in Figur 1 - besteht darin, die Kamera (5) auf einem ausreichend großen Teilstück einer ausreichend großen Kugel - genannt Kamerahalter oder Kamera-Adapter (1) - so zu befestigen, dass der parallaxfreie Punkt (2) der Kamera (5) im Zentrum der Kugel liegt. Dieser Kamera-Adapter kann durch loses Auflegen schnell und stabil mit einer stützenden Unterlage - genannt Stützstruktur oder Stativ-Adapter (3) - verbunden werden. Der parallaxfreie Punkt (2) bleibt trotz wechselnder Positionen des Kamera-Adapters ortsfest.

Der Kamera-Adapter (1), der im Auflagebereich an seiner Unterseite sphärisch ist und der eine Befestigung der Kamera (5) im Inneren der zugeordneten Sphäre ermöglicht, stellt den Kern der Erfindung dar.

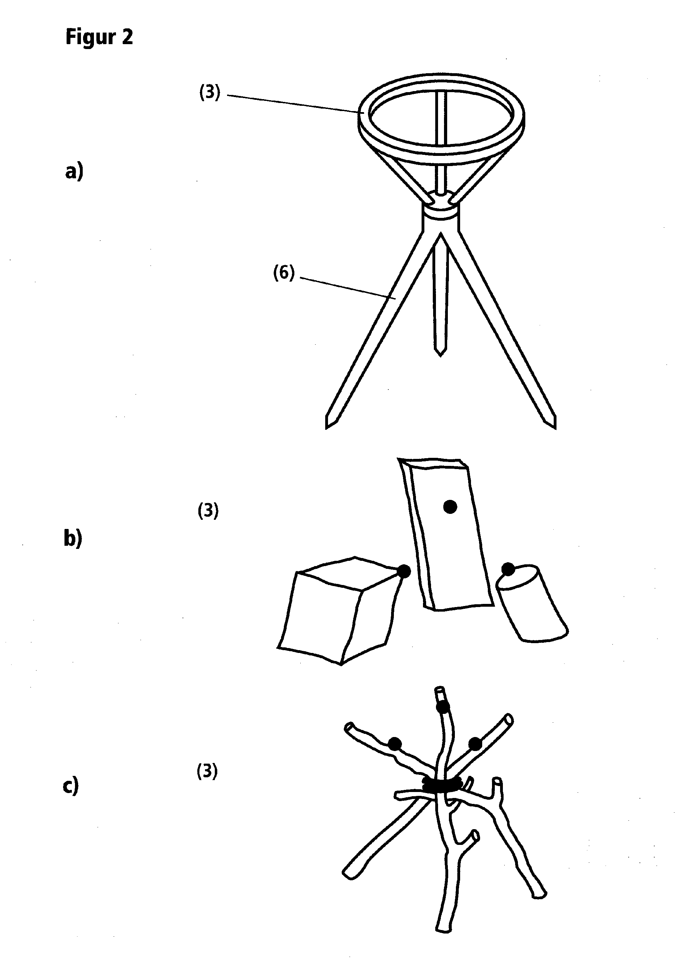

Figur 2 zeigt andere Unterlagen, die anstelle eines Stativs und eines Stativ-Adapters verwendet werden können um mit dem Kamera-Adapter (1) aus Figur 1 parallaxenfreie Aufnahmen zu erhalten; für einige Unterlagen sind zur Verdeutlichung drei Punkte als schwarze Kreise hervorgehoben, auf denen die sphärische Oberfläche des Kamera-Adapters in wechselnden Positionen aufliegt.

### Ausgestaltungen mit kontinuierlicher sphärischer Beweglichkeit

Ein breites Spektrum an Ausführungsvarianten von Kamera-Adapter und stützender Unterlage ermöglicht die Fixierung des parallaxfreien Punktes der Kamera in der aufzunehmenden Szene bei kontinuierlicher sphärischer Beweglichkeit, d.h. bei stufenloser Drehbarkeit der Kamera um beliebige Achsen.

Für einen Stativ-Adapter mit drei stützenden Punkten wie in Figur 2b oder 2c oder für einen Stativ-Adapter mit einem stützenden Kreis wie in Figur 2a liegen die möglichen Projektionspunkte auf einer Geraden. Erst aus dem Radius R, der z.B. einem sphärischen Kamera-Adapter zugeordnet ist, ergibt sich eindeutig die Lage des Projektionspunktes auf dieser Geraden. Im Hauptanspruch wird dem Rechnung getragen durch die Einbeziehung des Kamera-Adapters in die Definition des Projektionspunktes.

Sowohl die stützenden Punkte als auch die gestützten Punkte können einerseits aus nur drei Punkten bestehen oder sich andererseits zu Linien oder Flächen verbinden.

Beispielhaft sind in Tabelle 1 einige Ausgestaltungen genannt, welche eine stufenlose Drehbarkeit um Achsen mit kontinuierlich verstellbarer Richtung ermöglichen:

**Tabelle 1: Ausgestaltungen mit stufenloser Drehbarkeit um beliebige Achsen**

| **Gestützte Punkte des Kamera-Adapters** | **Stützende Punkte der Unterlage** |
|---|---|
| Ein Teilstück einer **Sphäre** vom Radius R mit dem parallaxfreien Punkt (2) der Kamera als Zentrum. Siehe Figur 1, oben. | Gerade, gekrümmte oder geknickte **Linien** auf einer Sphäre vom Radius R mit dem Projektionspunkt (4) als Zentrum. Siehe Figur 1b oder (3) in Figur 3. |
| Ein Teilstück einer **Sphäre** vom Radius R mit dem parallaxfreien Punkt (2) der Kamera als Zentrum. Siehe Figur 1, oben. | Ein Teilstück einer **Hohlsphäre** (z.B. eine Schüssel) vom Radius R mit dem Projektionspunkt (4) als Zentrum. Siehe (3) in Figur 4. |
| Eine **Sphäre** vom Radius R mit dem parallaxfreien Punkt (2) der Kamera als Zentrum. Siehe Figur 1, oben. | **Drei Punkte** im Raum, denen ein Umkreis zugeordnet ist, dessen Radius r kleiner als R ist. Die Punkte definieren eine gemeinsame Ebene und einen Umkreismittelpunkt. Der Projektionspunkt liegt orthogonal zur Ebene im Abstand d = Wurzel(R² - r²) über dem Umkreismittelpunkt. Siehe Figur 2b und c. |
| **Drei Punkte** auf einer Sphäre vom Radius R in deren Zentrum der parallaxfreie Punkt (2) der Kamera liegt. Siehe Figur 4. | Ein Teilstück einer **Hohlsphäre** vom Radius R mit dem Projektionspunkt (4) als Zentrum. Siehe Figur 4. |
| **Zwei Kreise,** die Schnittkreise zweier Ebenen mit einer Kugel vom Radius R sind - z.B. parallel, mit gleichem Radius r und Abstand d. Der parallaxfreie Punkt der Kamera liegt im Zentrum der Kugel. Siehe Figur 3. | **Ein Kreis** vom Radius k mit d/2 < k < R dem eine Orthogonale zugeordnet ist, die durch den Projektionspunkt läuft wobei die Entfernung des Projektionspunktes von der Kreisebene Wurzel(R² - d²/4) beträgt. Siehe Figur 3. |

### Ausgestaltungen mit eingeschränkter sphärischer Beweglichkeit

In der Panoramafotografie ist zumeist keine freie Drehbarkeit der Kamera um beliebige Achsen durch den parallaxfreien Punkt der Kamera erwünscht sondern lediglich eine schrittweise Drehbarkeit um ausgewählte Achsen, d.h. eine schnelle, rastende und sichere - d.h. Bedienfehler reduzierende - Fixierbarkeit in einer Menge von Positionen, die die parallaxenfreie Erfassung des gewünschten Blickfeldes unter Wahrung einer für das Zusammensetzen der einzelnen Aufnahmen benötigten Überlappung zwischen angrenzenden Bildern sicherstellt.

Die hierfür benötigten Blickrichtungen sowie die benötigten Orientierungen der Kamera (hoch/schräg/quer etc.) hängen vor allem ab von den von der Kamera erfassten Bildwinkeln (HFOV, VFOF, und DFOF für horizontal, vertical und diagonal field of view).

Die hierfür geeigneten Ausgestaltungen der Erfindung bewirken Beschränkungen in der Anzahl oder Ausrichtung der verfügbaren Drehachsen und in der Anzahl oder Schrittweite der verfügbaren Drehwinkel. Hierzu wird eine virtuelle sphärische Berührungsfläche von Kamera-Adapter und Stativ-Adapter mit Erhöhungen und Vertiefungen versehen, die nur in erwünschten Positionen ineinanderpassen während der parallaxfreie Punkt der Kamera über alle Positionen hinweg in der aufgenommenen Szene ortsfest bleibt.

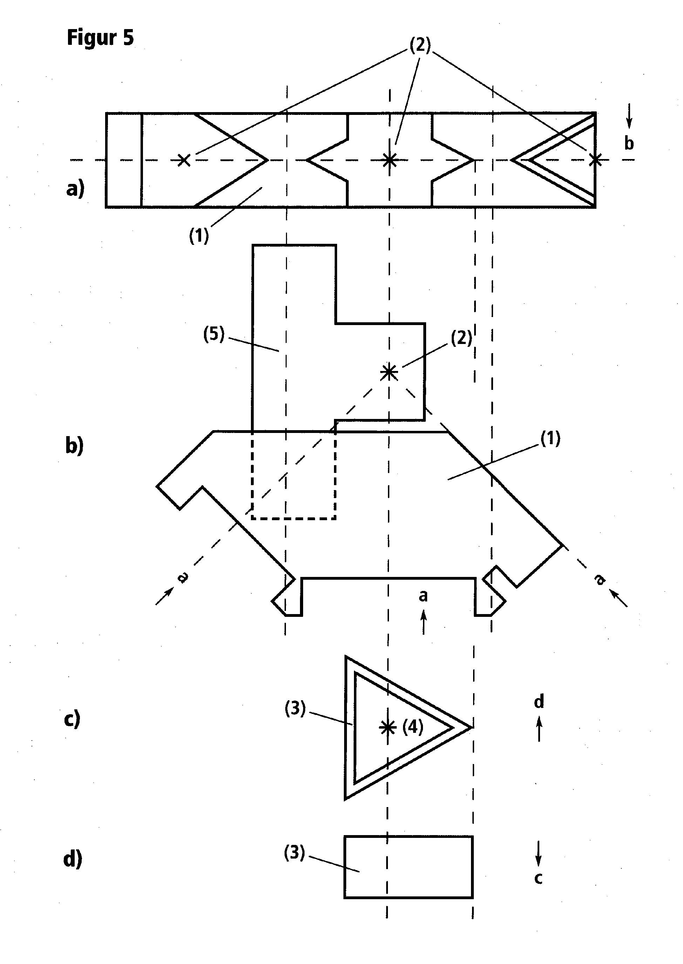

Figur 5 zeigt beispielhaft eine nicht-sphärische Ausgestaltung der Erfindung, bei der die Kamera (5) nur um drei Achsen, die sämtlich durch den parallaxfreien Punkt (2) laufen, gedreht werden kann. Die zwei Achsen für Zenit (links in 5 a und b) und Nadir (rechts in 5a und b) lassen dabei je drei Positionen der Kamera zu während die Achse für den Horizont (mittig in 5 a, b, c und d) sechs Positionen zulässt.

Wenn in Figur 5a und 5b die mittlere sechseckige Vertiefung durch eine kreisförmige Vertiefung mit geeignetem Radius ersetzt wird, dann kann der Kamera-Adapter zur Erfassung des Horizontes auf dieser Vertiefung ohne Anheben stufenlos um eine durch den parallaxfreien Punkt der Kamera laufende Achse geschwenkt werden während die anderen beiden Vertiefungen auf demselben Stativ-Adapter weiterhin nur ein gerastertes Schwenken durch Anheben, Drehen und Aufsetzen erlauben.

### Stativ-Adapter mit Stativ

Für den oben beschriebenen Kamera-Adapter in der sphärischen Ausgestaltung kann problemlos eine Vielzahl improvisierter Stative (wie in Figur 2b und 2c) als Stativ-Adapter verwendet werden. Dennoch ist die Verwendung eines mitgeführten verstellbaren Stativs für die Aufnahme von Panoramen vorteilhaft. Außerdem ist die Verwendung eines speziell an den Kamera-Adapter angepassten Statives vorteilhaft. Daher wird der Kamera-Adapter im folgenden durch Komponenten im Bereich des Stativs ergänzt:
- Ein den Kamera-Adapter ergänzender Stativ-Adapter (siehe Figur 2 a), der auf einem handelsüblichen Kamerastativ befestigt wird und auf den der Kamera-Adapter aufgelegt wird.
- Das Radialstativ (siehe Figur 1 b.) - ein ganz auf den Kamera-Adapter abgestimmtes Stativ, das keinen Schatten wirft, das klein, leicht und flach zusammenlegbar ist, und das den Bodenbereich, auf dem es steht, nur minimal verdeckt, so dass damit nahezu vollständige Bodenaufnahmen ohne Entfernung des Stativs möglich sind.

Die stützenden Elemente des Radialstativs sind als Kegelflächen (siehe eingangs "Terminologie") ausgelegt deren gemeinsamer Scheitel der Projektionspunkt ist. Für Flächen aus starrem Material wird als Leitkurve ein Polygonzug wie z.B. ein Dreieck gewählt, damit der Stativ-Adapter flach zusammenlegbar gestaltet werden kann. Bei Verwendung von Flächen aus flexiblem Material kann auch ein Kreis, eine Spirale oder eine andere gekrümmte Kurve als Leitkurve gewählt werden. Für ein Bodenstativ werden separate Stativbeine angebracht; für ein Tischstativ kann auf Stativbeine verzichtet werden. Falls vorhanden werden die Stativbeine so angebracht, dass ihre verlängerten Achsen durch den Projektionspunkt laufen.

### Die Verbindung zwischen Kamera-Adapter und Stativ-Adapter

Abhängig von Einsatzzweck, Gewicht, Schwerpunkt, und Abmessungen des Kamera-Adapters und des Stativ-Adapters kann oder muss die Verbindung zwischen Kamera-Adapter und Stativ-Adapter unterschiedlich ausgelegt werden.

Für Videoaufnahmen, die Schwenks enthalten, ist eine reibungsarme, gleitende oder über Rollen des Stativ-Adapters hergestellte Verbindung vorteilhaft. Hierbei muss das vom Schwerpunkt aus am parallaxfreien Punkt angreifende Drehmoment z.B. durch Anschläge oder Gegengewichte neutralisiert werden.

Für Panoramaaufnahmen oder für gewöhnliche Aufnahmen vom Stativ aus kann dieses Drehmoment auch aufgefangen werden durch reibungserhöhende Maßnahmen wie z.B. Gummibeschichtungen, aufgeraute Oberflächen, Rillen und Stege, oder durch eine Erhöhung des Andrucks - wie z.B. mittels elastischer Züge.

### Vorteile der Erfindung

- Der Kamera-Adapter ist leicht da er z.B. aus Schaum oder im 3D-Druck hergestellt werden kann.
- Der Kamera-Adapter kann preiswert hergestellt werden.
- Die zusätzlich zum Kamera-Adapter benötigte Ausrüstung ist leicht und preiswert - auf Drehscheibe, Schnellspannverschluss, Neigekopf und Stativ kann ohne Qualitätsverlust verzichtet werden.
- Der Kamera-Adapter ist trotz seiner Leichtigkeit im Vergleich zu gebräuchlichen Lösungen sehr stabil da das stützende Material einen großen Querschnitt aufweist und optimal angeordnet ist. Bei den gebräuchlichen Panoramaadaptern müssen Kräfte von über 1 kg 9,81 m/s² bei Hebeln von etwa 10cm über Profile mit einer Gesamtlänge von mindestens 20cm und mit einem Querschnitt von höchstens 2cm² übertragen werden. Dadurch treten elastische Biegungen um bis zu 5mm in wechselnde seitliche Richtungen auf. Diese elastischen Biegungen werden durch den beschriebenen Kamera-Adapter und durch das Radialstativ weitgehend eliminiert.
- Der Kamera-Adapter mitsamt Stativ-Adapter hat kaum Spiel, da die Kräfte nur über wenige und zudem großflächige Verbindungen und überwiegend orthogonal und torsionsfrei übertragen werden.
- Der Kamera-Adapter ist robust gegenüber mechanischen Einwirkungen - biegsam, kompressibel, und dennoch formbeständig.
- Der Kamera-Adapter ist robust bezüglich des Transportes. Beim gemeinsamen Transport mit anderen Teilen der Kameraausrüstung muss der Adapter z.B. nicht vor Schäden durch Kamera und Stativ geschützt werden. Ebenso muss die Kamera kaum vor Schäden durch den Adapter geschützt werden.
- Der Kamera-Adapter ist robust gegenüber rauen Umgebungen. Er wird durch Wasser, Sand, Staub, Frost und Hitze kaum beeinträchtigt.
- Der Kamera-Adapter kann problemlos bei Radtouren, Wanderungen oder Rucksackreisen mitgeführt werden.
- Das Radialstativ mit Kamera-Adapter kann für Panoramaaufnahmen ebenso wie für andere Aufnahmen (Portraits, Nachtaufnahmen etc.) eingesetzt werden.
- Das Radialstativ ermöglicht die Aufnahme des Nadirs vom Stativ aus.
- Das Radialstativ minimiert die störende Wirkung des Stativs auf Aufnahmen des Bodens und des Nadirs.

### Nachteile der Erfindung

- Kamera-Adapter und Stativ-Adapter müssen für jede unterstützte Kombination von Kamera und Objektiv auf die Lage des parallaxfreien Punktes und die Abmessungen der Kamera und des Objektivs abgestimmt sein.
- Kamera-Adapter und Stativ-Adapter müssen unter sorgfältiger Beachtung von Hebelkräften, Kippmomenten, Drehmomenten, Reibungskräften und Sichtwinkeln der Kamera entworfen werden.

### Vorteilhafte Ausführungen

### Ausführung für leichte Spiegelreflexkameras

- Der **Kamera-Adapter** wird aus ähnlichen Materialien wie ein Fahrradhelm hergestellt. Innen - zur Kamera hin - fester, geschlossenporiger Schaum. Außen - zur Unterlage hin - eine feste, glatte Kunststoffschicht. Als Grundform genügt eine halbe Kugelscheibe. Diese enthält eine Ausnehmung in welche die Kamera eingesetzt werden kann. Der Kugelradius wird so groß gewählt, dass er sowohl für Fisheye-Objektive als auch für Superweitwinkel-Zooms ausreicht. Der Adapter liegt direkt auf dem Radialstativ auf.
- Die **Kamera** wird in den Adapter einfach eingelegt. Eine Verriegelung, Verschraubung oder ähnliches ist nicht zwingend erforderlich. Um die Verwendung unterschiedlicher Kameragehäuse und Objektive mit demselben Adapter zu ermöglichen, kann der Adapter mit Anpassungsstücken für die Kamera und das Objektiv ausgestattet sein.
- Das **Radialstativ** besteht aus drei Beinen und drei Flächen. Die drei Flächen sind z.B. aus Blech, Kunststoff, Carbon oder Sperrholz gefertigt. Die drei Flächen bilden Kegelflächen mit dem unterstützten parallaxfreien Punkt als Scheitelpunkt und mit einem gleichseitigen Dreieck als Leitkurve. Die drei Flächen werden an ihren Seitenkanten miteinander sowie mit je einem der drei Stativbeine verbunden. Als Stativbeine können z.B.
   solche verwendet werden, wie sie die Firma Novoflex für den hauseigenen Quadropod anbietet.

### Ausführungen für panoramataugliche Kompaktkameras und Smartphones

- Der Kamera-Adapter wird wie oben als Volumen aus Schaum hergestellt. Für die Kugel ist jedoch ein deutlich kleinerer Radius ausreichend. Kamerahersteller können das benötigte Formteil in die Verpackung ihrer Kamera integrieren. Kamerahersteller können darüber hinaus die Form ihrer Kamera so auslegen, dass diese auf Trinkgläsern auch ohne separaten Kamera-Adapter parallaxenfehlerfrei geschwenkt werden kann.
- Das oben beschriebene Radialstativ kann für diese Klasse von Geräten kleiner, leichter und preiswerter ausgeführt werden. Dabei genügen auch deutlich dünnere Stativbeine als die von Novoflex für den Quadropod angebotenen.
- Alternativ kann der **Kamera-Adapter** aus zusammensteckbaren Flachteilen hergestellt werden. Entsprechende Teile eignen sich sowohl zum Verkauf als auch zur Veröffentlichung von Schnittmustern für den Eigenbau im Rahmen von Marketing-Maßnahmen. Für solche Adapter werden Schnittmuster auf DIN-A4 Papier gedruckt und dann auf Karton, starke Plastikfolie, Sperrholzplatte oder ähnliches geklebt. Das beklebte Material wird gemäß Schnittmuster ausgeschnitten oder ausgesägt. Die entstehenden Teile werden zum Adapter zusammengesteckt. Der Adapter nimmt von oben her exakt die Kamera auf. Zur Unterlage hin werden die Flachteile nach der benötigten Kugelform geschnitten. Das Zentrum der Kugel ist dabei der parallaxfreie Punkt der Kamera.
- Ein passendes **Radialstativ** kann ebenso per Schnittmuster aus starker, lichttransparenter Plastikfolie hergestellt werden.
- **Bierstativ:** Beide zuvor genannten Adapter können auf einem bayerischen Bierglas wie etwa einem Seidel für eine Halbe als improvisiertem Stativ parallaxenfehlerfrei geschwenkt werden. Daher ist dieser Kamera-Adapter u.a. geeignet für die gesellige und preisbewusste Jugend.

### Beschreibung der Erfindung

Es zeigen:
**Figur 1****:**
   a) Eine sphärische Ausführung des Kamera-Adapters (1).
      Bei Verwendung auf den Stativ-Adaptern aus Figur 1b oder 2a genügt die schmale Bauform. Bei Verwendung auf den Stativ-Adaptern aus Figur 2b oder 2c ist die angedeutete breitere Bauform zu bevorzugen.
   b) Ein Radialstativ bestehend aus Stativ-Adapter (3) und Beinen (7). Kamera-Adapter und Stativ-Adapter sind auf einen gemeinsamen Kugelradius R abgestimmt aber in verschiedenem Maßstab gezeichnet.
**Figur 2****:** Alternative Unterlagen für den Kamera-Adapter aus Figur 1:
   c) Ein Stativ-Adapter (3), montiert auf ein handelsübliches Dreibeinstativ (6).
   d) Ein Improvisierter Stativ-Adapter aus Stein, Brett und Pfosten mit Berührungspunkten zum Kamera-Adapter an Ecke, Fläche und Kante.
   e) Ein Improvisierter Stativ-Adapter aus zusammengesteckten und -gebundenen Ästen. Hervorgehoben: Berührungspunkte zum Kamera-Adapter.

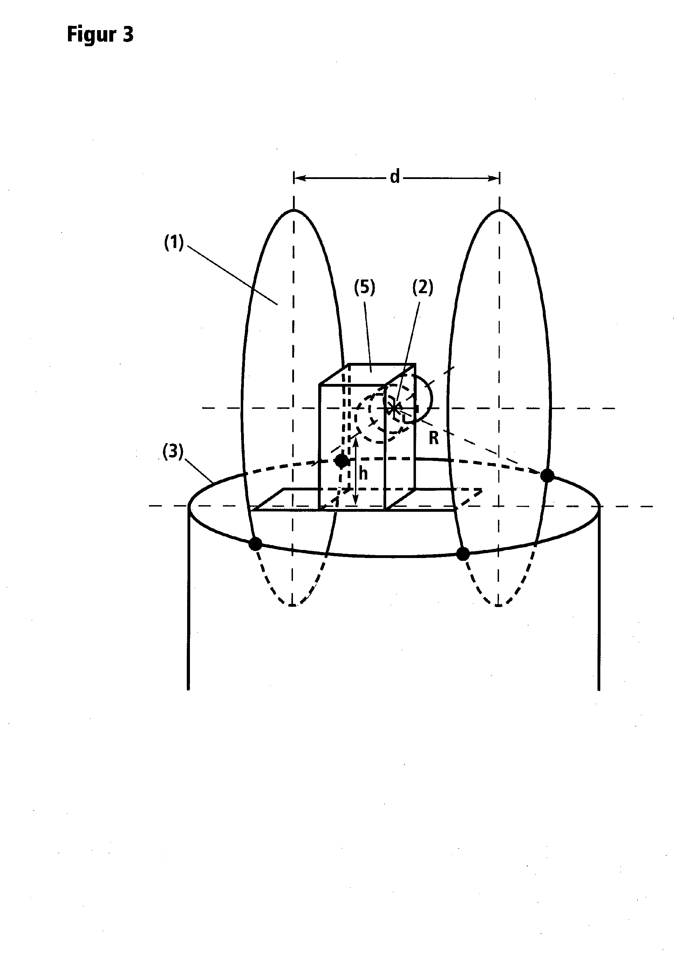

**Figur 3****:** Ausgestaltung mit voller sphärischer Beweglichkeit:
   Kamera-Adapter (1) aus Ringen oder Scheiben, mit Kamera (5);
   der Stativ-Adapter (3) ist ein Hohlzylinder mit kreisförmiger Stützlinie.

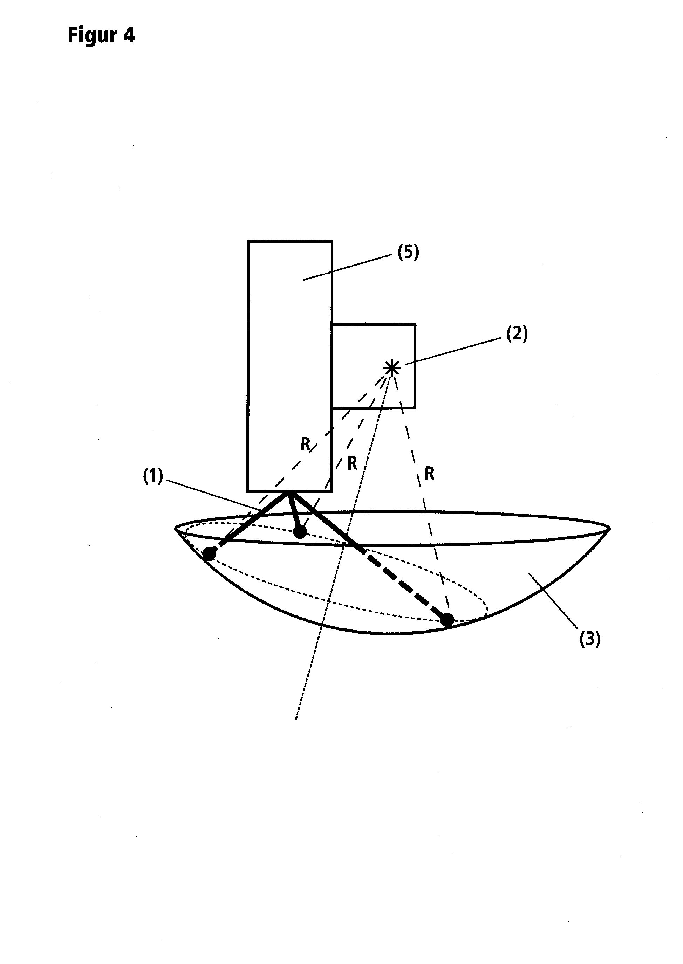

**Figur 4****:** Ausgestaltung mit eingeschränkter sphärischer Beweglichkeit und vertauschten Seiten von Punkten und Sphäre (ggü. 1a mit 2b oder mit 2c):
   Ein Kamera-Adapter (1) mit nur drei Auflagepunkten zum Stativ-Adapter (3).
   Der Kamera-Adapter ist so ausgelegt, dass der parallaxfreie Punkt (2) der Kamera (5) zu allen Fußpunkten des Stativs den gleichen Abstand R hat.
   Der Stativ-Adapter (3) ist eine Hohlkugel vom Radius R.
**Figur 5****:** Ausgestaltung mit eingeschränkter Wahl von Positionen:
   a) Unterseite des Kamera-Adapters (1) in einer ausgefalteten Darstellung. Durch die Ausfaltung ist der parallaxfreie Punkt (2) 3mal (verdeckt) im Bild. Die hellen Bereiche sind Vertiefungen. Diese Ausgestaltung unterstützt je drei Aufnahmen für den Zenit und den Nadir und sechs Aufnahmen für den Horizont.
   b) Mittiger Längsschnitt durch den Kamera-Adapter (1) in Seitenansicht.
   c) Draufsicht auf den Stativ-Adapter. Die Vertiefungen aus a) passen in 3+6+3 = 12 verschiedenen Positionen auf den Stativ-Adapter.
   d) Seitenansicht des Stativ-Adapters.

### Bezugszeichenliste

- 1: Kamera-Adapter
- 2: Parallaxfreier Punkt des Kamera-Adapters und der darin befestigten Kamera
- 3: Stativ-Adapter
- 4: Projektionspunkt des Stativ-Adapters
- 5: Kamera
- 6: Stativ
- 7: Abnehmbare Stativbeine

## Patentansprüche

1. Eine Kamerahalterung, die dafür geeignet ist, mit einer Kamera mehrere Aufnahmen für ein Panorama zu erstellen,
die es ermöglicht, dass die mehreren Aufnahmen frei sind von Parallaxenfehlern,
die schrittweise oder gleitende Drehungen der Kamera um mindestens eine Achse ermöglicht,
die so gestaltet ist, dass bei den Drehungen der Abstand der Drehachse vom parallaxenfreien Punkt der Kamera höchstens 5mm beträgt,
die die Kamera führt durch sphärische Elemente, die sich entlang der Oberfläche einer gedachten Sphäre S bewegen, welcher ein Radius R und ein Mittelpunkt M zugeordnet ist,
**dadurch gekennzeichnet, dass**
die Unterseite der Kamerahalterung durch die Oberfläche von S konvex beschnitten ist (Teil 1 in den Figuren 1a und 3),
die Unterseite der Kamerahalterung zumindest bereichsweise entlang der Oberfläche der Sphäre S verläuft,
die Unterseite der Kamerahalterung entlang möglicherweise unterbrochener stützender Linien oder Flächen, die überwiegend auf der Oberfläche von S verlaufen, einen linken vordersten auf S liegenden Punkt der Kamerahalterung mit einem solchen linken hintersten Punkt und einen rechten vordersten auf S liegenden Punkt der Kamerahalterung mit einem solchen rechten hintersten Punkt verbindet (seitliche Randlinie von Teil 1 in den Figuren 1a und 3),
die Kamerahalterung erfindungsgemäß in mehreren Aufnahmepositionen auf eine stützende Unterlage aufgesetzt werden kann, deren Oberseite durch die Oberfläche von S konkav beschnitten ist (Figuren 1, 3 und 4),
die Kamerahalterung lose auf der stützenden Unterlage liegt,
die Kamera durch aufeinanderfolgendes Abheben der Kamerahalterung von der stützenden Unterlage, Drehen der Kamerahalterung im abgelösten Zustand und Aufsetzen der Kamerahalterung auf die stützende Unterlage in die mehreren Aufnahmepositionen gebracht werden kann,
die Vorderseite der Kamerahalterung in ihrem mittleren Bereich unterhalb der Ebene U liegt, welche das Blickfeld der Kamera nach unten begrenzt (Figur 1a rechts) und die beiden vorderen seitlichen Ränder der Kamerahalterung, soweit sie über der Ebene U liegen, seitlich außerhalb des Blickfeldes der Kamera liegen (Figur 3), so dass die Kamerahalterung in schräg nach unten gerichteten Aufnahmepositionen kippstabil auf der stützenden Unterlage steht ohne dass die Kamerahalterung in das Blickfeld der Kamera gelangt.

2. Kamerahalterung nach 1,
**dadurch gekennzeichnet, dass**
die Kamerahalterung im vorderen Bereich mindestens ein Gegengewicht vorsieht,
das mindestens eine Gegengewicht sich seitlich außerhalb des Sichtbereichs der Kamera befindet,
das mindestens eine Gegengewicht den Schwerpunkt P der Kamera mitsamt Objektiv und Kamerahalterung so verschiebt, dass P lotrecht über der Stützfläche liegt, welche der stützenden Unterlage und der gestützten Kamerahalterung zugeordnet ist, so dass die Kamerahalterung kippstabil auf der Unterlage steht.

3. Kamerahalterung nach 1 bis 2,
**dadurch gekennzeichnet, dass**
das Drehmoment, welches durch das Gewicht des Systems aus Kamera, Objektiv und Kamerahalterung mit oder ohne Gegengewicht zwischen der Kamerahalterung und der Unterlage wirkt, durch Elemente auf der Unterseite der Kamerahalterung wie z.B. verstellbare Anschläge, Gummibeschichtungen, Rillen oder Stege aufgefangen wird.

4. Eine Kamerahalterung nach 1 bis 3,
**dadurch gekennzeichnet, dass**
alle Teile der Kamerahalterung starr und gelenkfrei miteinander verbunden sind.

5. Kamerahalterung nach 1 bis 4,
**dadurch gekennzeichnet, dass**
die Kamerahalterung erfindungsgemäß in mehreren Aufnahmepositionen auf einen Stützring aufgesetzt werden kann, dessen Innendurchmesser mindestens 5cm und höchstens 20cm beträgt,
der Radius R größer als 4 cm ist,
die Kamerahalterung weniger als 500g wiegt,
die Kamerahalterung in einen Quader von 8cm Höhe, 12cm Breite und 20cm Länge passt,
die Fixierung der Kamera in der Kamerahalterung gegenüber horizontal wirkenden Kräften durch Formschluss mit dem Gehäuse oder durch Formschluss mit dem Objektiv erfolgt.

6. Kamerahalterung nach 1 bis 5,
**dadurch gekennzeichnet, dass**
die Kamerahalterung vorne seitlich außerhalb des Blickfeldes der Kamera (Figur 3) so weit nach oben reicht, dass die Vorderseite der Kamerahalterung auf der Unterlage kippstabil nach unten gedreht werden kann, bis die Kamera den Nadir erfasst
und dass die Kamerahalterung hinten (Figur 3) so weit nach oben reicht, dass die Hinterseite der Kamerahalterung auf der Unterlage nach unten gedreht werden kann, bis die Kamera den Zenit erfasst.

7. Eine Kamerahalterung nach 1 bis 6,
**dadurch gekennzeichnet, dass**
die Kamera sowohl im Querformat als auch im Hochformat in die Kamerahalterung eingesetzt werden kann,
und dass die Verbindung zwischen der Kamerahalterung und der Kamera hergestellt wird durch an die Kamera angepasste Elemente, die in die Kamerahalterung eingesetzt werden können.

8. Ein System zur fotografischen Aufnahme von Panoramen mit einer Kamerahalterung nach 1 bis 7 und mit einer Stützstruktur,
**dadurch gekennzeichnet, dass**
die Oberseite der Stützstruktur durch die Oberfläche S konkav beschnitten ist (Teil 3 in den Figuren 1b, 2a, 3 und 4), so dass die Kamerahalterung und die Stützstruktur zusammenpassen.

9. Ein System nach 8,
**dadurch gekennzeichnet, dass**
die Stützstruktur auf einem Stativ befestigt werden kann (Teil 3 in Figur 2a).

10. System nach 8 bis 9,
**dadurch gekennzeichnet, dass**
der obere Teil der Stützstruktur aus dünnen Kegelflächen besteht, deren Scheitelpunkt der parallaxfreie Punkt der Kamera ist, so dass die Kegelflächen aus der Sicht der Kamera nur als Linien erscheinen und der obere Teil der Stützstruktur den Nadir freilässt (Figur 1 b).

11. Ein System nach 10,
**dadurch gekennzeichnet, dass**
die Stützstruktur Stativbeine aufweist, die in Kegelflächen liegen, deren Scheitelpunkt der parallaxfreie Punkt der Kamera ist, so dass die Stativbeine aus der Sicht der Kamera nur minimal sichtbar sind und für die Kamera im Nadir der Boden sichtbar ist (Figur 1 b).

12. System nach 8 bis 11,
**dadurch gekennzeichnet, dass**
die Stützstruktur aus mehreren Segmenten besteht, die lösbar oder beweglich miteinander verbunden sind
und jedes der mehreren Segmente so flach ist, dass es in eine Schachtel mit einer Höhe von drei cm passt.

13. System nach 8 bis 12Schutzanspruch 12,
**dadurch gekennzeichnet, dass**
die Stützstruktur zumindest teilweise aus lichttransparentem Material besteht.

14. Ein System zur fotografischen Aufnahme von Panoramen mit einer Stützstruktur und mit einer auf der Stützstruktur ruhenden Kamerahalterung,
wobei die Kamerahalterung in mehreren Positionen auf die Stützstruktur passt,
und wobei die Kamerahalterung und die Stützstruktur Vorsprünge und
Vertiefungen aufweisen,
**dadurch gekennzeichnet, dass**
in den mehreren Positionen ein der Kamera zugeordneter parallaxfreier Punkt in der aufzunehmenden Szene ortsfest bleibt,
die Vorsprünge und Vertiefungen in den mehreren Positionen rastend ineinandergreifen,
die Kamerahalterung von der Stützstruktur abgehoben und in jeder der mehreren Positionen wieder auf die Stützstruktur aufgesetzt werden kann (Figur 5).
